(19) Europäisches Patentamt
European Patent Office
Office européen des brevets

(11) **EP 2 561 419 B1**

(12) **EUROPÄISCHE PATENTSCHRIFT**

(45) Veröffentlichungstag und Bekanntmachung des Hinweises auf die Patenterteilung:
**06.12.2017 Patentblatt 2017/49**

(21) Anmeldenummer: **11718260.0**

(22) Anmeldetag: **31.03.2011**

(51) Int Cl.:
*G05D 1/02* (2006.01)     *G06K 9/00* (2006.01)

(86) Internationale Anmeldenummer:
**PCT/DE2011/000359**

(87) Internationale Veröffentlichungsnummer:
**WO 2011/131165 (27.10.2011 Gazette 2011/43)**

(54) **VERFAHREN ZUR BESTIMMUNG DES FAHRBAHNVERLAUFES FÜR EIN KRAFTFAHRZEUG**

METHOD FOR DETERMINING THE LANE COURSE FOR A VEHICLE

PROCÉDÉ POUR DÉTERMINER LE PARCOURS SUR UNE VOIE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2010 DE 102010020984**
**20.04.2010 EP 10401058**

(43) Veröffentlichungstag der Anmeldung:
**27.02.2013 Patentblatt 2013/09**

(73) Patentinhaber: **Conti Temic Microelectronic GmbH**
**90411 Nürnberg (DE)**

(72) Erfinder:
- **MEIS, Urban**
  **88131 Lindau (DE)**
- **WIEDEMANN, Christoph**
  **88142 Wasserburg (DE)**
- **KLEIN, Wladimir**
  **88131 Lindau (DE)**
- **BRÜGGEMANN, Christoph**
  **07745 Jena (DE)**

(56) Entgegenhaltungen:
**EP-B1- 1 684 142          WO-A1-03/015053**
**DE-A1-102005 058 809**

- **YONG ZHOU ET AL: "A robust lane detection and tracking method based on computer vision", MEASUREMENT SCIENCE AND TECHNOLOGY, IOP, BRISTOL, GB, Bd. 17, Nr. 4, 1. April 2006 (2006-04-01), Seiten 736-745, XP020103441, ISSN: 0957-0233, DOI: DOI:10.1088/0957-0233/17/4/020**
- **ANDREW H S LAI ET AL: "Lane Detection by Orientation and Length Discrimination", IEEE TRANSACTIONS ON SYSTEMS, MAN AND CYBERNETICS. PART B:CYBERNETICS, IEEE SERVICE CENTER, PISCATAWAY, NJ, US, Bd. 30, Nr. 4, 1. August 2000 (2000-08-01) , XP011056897, ISSN: 1083-4419**
- **URBAN MEIS ET AL: "A new method for robust far-distance road course estimation in advanced driver assistance systems", INTELLIGENT TRANSPORTATION SYSTEMS (ITSC), 2010 13TH INTERNATIONAL IEEE CONFERENCE ON, IEEE, PISCATAWAY, NJ, USA, 19. September 2010 (2010-09-19), Seiten 1357-1362, XP031792765, ISBN: 978-1-4244-7657-2**

EP 2 561 419 B1

**Beschreibung**

Die Erfindung betrifft ein Verfahren zur Bestimmung des Fahrspurverlaufes für ein bewegtes Kraftfahrzeug mit wenigstens einem Umgebungssensorsystem gemäß Oberbegriff des Patentanspruchs 1. Ferner betrifft die Erfindung ein Kraftfahrzeug mit einer Vorrichtung zur Durchführung des erfindungsgemäßen Verfahrens.

Ein wichtiger Bestandteil von Fahrerassistenzsystemen, die z. Bsp. zur Abstandsregelung oder zur Spurhaltung eingesetzt werden, ist die Spurerkennung.

Bekannte Spurerkennungssysteme basieren auf der Zuordnung der erkannten Strukturen zur Fahrspurseite und deren Abstand zur Spurmitte. Je weiter entfernt sich das Messsystem von den Strukturen befindet, desto schwieriger ist diese Zuordnung vorzunehmen. Weiterhin bezieht sich die Beschreibung der erkannten Spur üblicherweise auf die Position des Fahrzeugs und liefert keine explizite Informationen über den entfernten Bereich. Das übliche Fahrspurmodell verwendet die Krümmung und die Krümmungsänderung eines Klothoidenmodells zur Beschreibung des weiteren Straßenverlaufs. Dabei sind die Schätzwerte eine Mittelung an die Eigenposition des Fahrzeugs. Daher sind bisherige Verfahren nicht in der Lage, den genauen Übergang zwischen zwei Klothoidensegmenten zu bestimmen, da Straßen durch eine Aneinanderreihung von Klothoidensegmenten angelegt werden. So kann z.B. der Übergang einer Kurve in eine Gerade nicht präzise bestimmt werden. Dies bedeutet für einen Fahrzeug-Querregler eines Fahrerassistenzsystems ein unnatürliches Regelverhalten an diesen Übergangsstellen.

Diese Problem wird gemäß der US 6,718,259 B1 dadurch gelöst, dass die von einem Sensorsystem erzeugten Umfelddaten einer Filterbank aus mehreren Kalman-Filtern zugeführt werden, wobei das Fahrspurmodell auf einem Klothoidenmodell beruht, bei dem der vor dem Fahrzeug liegende Fahrbahnbereich in einen Nahbereich bis in eine Distanz d1 und einen Fernbereich mit einer Distanz von d1 bis d2 mit unterschiedlichen Klothoidenparametern geteilt wird, wobei angenommen wird, dass der Übergang zwischen diesen beiden Bereichen kontinuierlich ist. Damit wird ein Übergangspunkt zwischen zwei Klothoidensegmenten der Fahrbahn nicht geschätzt, sondern in der Distanz d1 der Übergangspunkt angenommen. Die einzelnen Kalman-Filter der Filterbank sind jeweils an ein Fahrspurmodell angepasst, die sich in der Lage des Übergangspunktes relativ zur Distanz d1 unterscheiden. Jedes Kalman-Filter dieser Filterbank liefert eine Schätzung der Spurmodelparameter des jeweiligen Models, wobei anschließend diese Schätzwerte jeweils mit einem der Wahrscheinlichkeit des Auftretens des jeweiligen Models entsprechenden Gewichtswert gewichtet werden. Die gewichteten Ausgangsdaten werden fusioniert.

Der Nachteil dieses bekannten Verfahrens gemäß der US 6,718,259 B1 liegt in der hohen Komplexität der aus Kalman-Filtern bestehenden Filterbank und führt zu langen Laufzeiten. Die Übergangsstelle wird nicht erkannt, sondern weggefiltert, der Modellfehler bleibt damit erhalten.

Ein gattungsbildendes Verfahren beschreibt YONG ZHOU ET AL in "A robust lane dedection an tracking method based on computer Vision", MEASUREMENT SCIENCE AND TECHNOLOGY; IOP BRISTOL; GB; Bd. 17, Nr. 4, 1. April 206 (2006-04-01), Seiten 736-745, XP020103441, ISSN: 0957-0233, DOI:10.1088/0957-0233/17/4/020.

Bei diesem bekannten Verfahren wird zur Bestimmung eines Fahrspurverlaufs mittels eines Umgebungssensorsystems ein sogenanntes "deformable template model"-Verfahren verwendet, bei dem eine verformbare Vorlage (deformable template), nämlich ein verformbares mathematisches Fahrspurmodell mit dem Bild einer Fahrspur verglichen und solange verformt wird, bis die größte Übereinstimmung vorliegt.

Als mathematisches Fahrspurmodell werden bei diesem bekannten Verfahren vier Parameter $K$, $B_L$. $B_R$, und $n_0$ verwendet, die sich auf die Krümmung $C_0$ der Fahrbahn (approximiert durch Parabeln), den Abstand d des Fahrzeugs zum Fahrbahnrand sowie auf die Orientierung des Fahrzeugs hinsichtlich des Fahrbahnrandes beziehen. Mit einer Wahrscheinlichkeitsfunktion, nämlich einer Likelihood-Funktion wird das Maß der Übereinstimmung eines gegebenen Parametersatzes x des Fahrspurmodells mit dem von dem Umgebungssensorsystem erzeugten aktuellen Bild bestimmt. Je höher der Wert dieser Likelihood-Funktion ist, desto besser passt das Fahrspurmodell mit dem gegebenen Parametersatz x auf das Bild der Fahrspur.

Diese Likelihood-Funktion verwendet die mittels eines Sobel-Operators als Kantendetektions-Filter ermittelten Bildpunkte, wobei nur Bildpunkte oberhalb einer niedrig spezifizierten Schwelle verwendet werden. So wird ein Gradientenfeld $f_m(u,v)$, welches den Gradientenwert angibt und ein Richtungsfeld $f_d(u,v)$, welches das Verhältnis des vertikalen und horizontalen Gradientenwertes angibt erzeugt. Mit diesen Informationen wird zusammen mit einer Gewichtungsfunktion $W(D)$ (deren Wert mit zunehmendem minimalen Abstand $D_L(u,v)$ und $D_R(u,v)$ eines Bildpunktes $(u,v)$ von der linken bzw. rechten Fahrspurbegrenzung des Fahrspurmodells abnimmt) sowie den Winkeln $\beta_L$ und $\beta_R$ (Winkel zwischen der Gradientenrichtung des Bildpunktes $(u,v)$ und der tangentialen Richtung der linken Fahrspurbegrenzung bzw. der rechten Fahrspurbegrenzung des Fahrspurmodells in dessen Punkt mit minimalen Abstand zum Bildpunkt $(u,v)$) die Likelihood-Funktion erstellt.

Bei diesem Verfahren leistet jeder Bildpunkt einen Beitrag zum Wahrscheinlichkeitswert der Likelihood-Funktion, der sich aus dem Gradientenwert, multipliziert mit der Gewichtsfunktion W, deren Wert mit dem Abstand des Bildpunktes von der durch den Parameterwert x definierten Fahrspurbegrenzung abnimmt, und der Winkelfunktion cos bzw. sin, deren Wert mit einer zunehmenden Abweichung der Gradientenrichtung des Bildpunktes von der tangentialen Richtung des Fahrspurmodells ebenso abnimmt, bestimmt. Damit wird anhand der Bildpunkte mittels der Likelihood-Funktion eine Spurhypothese x geprüft. Je höher dieser Wert der Likelihood-Funktion ist, desto besser passt diese Spurhypothese mit den Bilddaten zusammen.

Diese Likelihood-Funktion wird einer Optimierung hinsichtlich des maximalen Wertes über dem Parameterraum der Fahrspurparameter unterzogen, indem in einem iterativen Verfahren (Tabu-Suche) der Parametersatz des Fahrspurmodels mit Werten aus einer definierten Nachbarschaft dieses Parametersatzes belegt und mit der Likelihood-Funktion analysiert wird, um das Maximum zu finden.

Zur Bestimmung dieses Maximums wird unter Nutzung des Bayes Theorem zunächst eine a-posteriori-Wahrscheinlichkeit x* und eine Wahrscheinlichkeitsdichte p(x) als a-priori-Wahrscheinlichkeit für das Fahrspurmodell bestimmt und anschließend mittels einer Tabu-Suche das globale Maximum gesucht. Das Fahrbahnmodell, dessen Parameter x* zum Maximum der Likelihood-Funktion führen, stimmt mit dem tatsächlichen Fahrbahnverlauf in den Bilddaten überein.

Aufgabe der Erfindung ist es, ein gegenüber dem bekannten Verfahren verbessertes Verfahren der eingangs genannten Art anzugeben, das die Übergangstellen des Kurvenverlaufs der Fahrspur erkennen und damit den Fahrspurverlauf bis in den Fernbereich korrekt modellieren kann.

Diese Aufgabe wird gelöst durch ein Verfahren mit den Merkmalen des Patentanspruchs 1

Dieses Verfahren zur Bestimmung des Fahrspurverlaufes für ein bewegtes Kraftfahrzeug mit wenigstens einem Umgebungssensorsystem, bei dem die von dem auf die Fahrspur gerichteten Umgebungssensorsystem erzeugten Sensordaten einer Auswertung zur Erkennung von fahrspurrelevanten Merkmalen unterzogen werden, ein Fahrspurmodell mit wenigstens einem den Spurverlauf bestimmenden Spurmodellparameter für die Fahrspur erzeugt wird, und in den Sensordaten fahrbahnparallele Strukturen wenigstens eines Entfernungsbereichs detektiert werden, zeichnet sich erfindungsgemäß dadurch aus, dass

- die tangentiale Richtung wenigstens der einen fahrbahnparallelen Struktur als Steigung einer Tangente bestimmt wird, und
- zur Bestimmung wenigstens des einen Spurmodellparameters mittels eines prädiktiven Schätzverfahrens im Fahrspurmodell der Wert der Steigung der Tangente als Wert für die Tangentenrichtung im Berührungspunkt mit der fahrbahnparallelen Struktur übernommen wird.

Mit diesem erfindungsgemäßen Verfahren werden sämtliche fahrbahnparallele Strukturen, wie Fahrspurmarkierungen, Bordsteine, Leitplanken, Randbebauungen und dgl. zur Schätzung des Fahrspurverlaufs verwendet, ohne dass hierzu zusätzlich Filtergrößen für das Schätzverfahren eingeführt werden müssen. Ferner ist dieses erfindungsgemäße Verfahren unabhängig vom seitlichen Abstand der fahrbahnparallelen Strukturen und es ist auch nicht erforderlich, für das Kraftfahrzeug eine Abweichung von der Spurmitte zu schätzen, wodurch wegen der dadurch bedingten geringen Anzahl von Freiheitsgraden das Schätzverfahren robuster, laufzeiteffizienter und weniger fehleranfällig ist. Damit lässt sich der Verlauf der Fahrspur über den gesamten betrachteten Entfernungsbereich mittels eines Fahrspurmodells mit äußerst präzisen Schätzwerten modellieren, wobei alle Fahrspurmodelle geeignet sind, die zu stetig differenzierbaren Funktionen führen. Das ist neben einem klothoidischen Fahrspurmodel, bspw. das Kreisbogenmodell, das Zweifach-Klothoidenmodell und das Spline-Modell.

Weiterhin ist das erfindungsgemäße Verfahren auch unabhängig von der Art des verwendeten Umgebungssensorsystems. Somit ist sowohl ein bildbasierter Sensor, also bspw. eine Kamera, als auch ein Radarsensor, ein Lidarsensor oder eine digitale Karte mit GPS im Rahmen eines Navigationssystems oder eine Kombination hiervon verwendbar.

Schließlich lassen sich mit dem erfindungsgemäßen Verfahren auch fahrspurbezogene Systemgrenzen prädizieren, die vorteilhaft in Fahrerassistenzsystemen genutzt werden können. So kann z. Bsp. bei einer Zufahrt eine enger werdenden Kurve im Voraus erkannt werden kann, so dass im Rahmen eines Fahrerassistenzsystems der Fahrer des Fahrzeugs auf eine Systemübergabe vorbereitet oder es ein Kurvenradius in 60 m Entfernung vor dem Fahrzeug bzw. ein minimaler Kurvenradius angezeigt werden kann.

Gemäß einer vorteilhaften Weiterbildung der Erfindung ist es vorgesehen, fahrbahnparallele Strukturen aus den Sensordaten mittels eines Kantendetektionsverfahrens zu bestimmen, indem Grauwertgradienten ermittelt und ausgewertet werden, vorzugsweise wird hierfür eine Hough-Transformation verwendet, mit der Formen, bspw. Geraden oder Kreise, die von Kantenpunkten gebildet werden, detektiert werden können. Um falsche Strukturen auszuschließen ist es vorteilhaft, ein Parallelitätskriterium einzuführen, mit dem in gleicher Entfernung vor dem Kraftfahrzeug sich auf beiden Seiten der Fahrbahn sich befindende fahrbahnparallele Strukturen detektierbar sind und nicht-parallele Strukturen ausgeschlossen werden können.

Weiterhin wird gemäß einer vorteilhaften Ausgestaltung der Erfindung die prädiktive Schätzung des Spurmodellparameters mittels eines Kalman-Filter-Models durchgeführt, das bspw. mittels eines dem Fachmann bekannten Polynoms dritter Ordnung approximiert wird. Es können natürlich auch dem Kalman-Filter-Modell vergleichbare Schätzverfahren verwendet werden.

Schließlich zeigt sich gemäß einer Weiterbildung der Erfindung die vorteilhaften Eigenschaften des erfindungsgemäßen Verfahrens dadurch, dass aus den den Nahbereich der Fahrspur erfassenden Sensordaten die Spurbreite der Fahrspur, die Abweichung des Kraftfahrzeugs von der Spurmitte und der Gierwinkel des Kraftfahrzeugs bestimmt wird und der weitere Fahrspurverlauf mittels des wenigstens einen erzeugten Spurmodellparameters bestimmt wird.

Damit zeigt sich, dass das erfindungsgemäße Verfahren aufgrund der Unabhängigkeit von der Fahrspurbreite und der Abweichung des Fahrzeugs von der Spurmitte zu einer Reduktion des Zustandsraumes führt, wodurch das Verfahren robuster und laufzeiteffizienter wird. Diese Partitionierung des Zustandsraumes in Nahbereich und Fernbereich bewirkt, dass Breitenänderungen der Fahrspur, z. Bsp. Spuraufweitungen oder Ausfahrten keinen negativen Einfluss auf die Spurmodellparameter haben. Die Fahrspurbreite und de Abweichung des Fahrzeugs von der Spurmitte lassen sich auf den relevanten Nahbereich beschränken und müssen nicht über den gesamten Messbereich geschätzt und gemittelt werden.

Das erfindungsgemäße Verfahren kann vorteilhaft in einem Fahrzeug mit einem Fahrerassistenzsystem verwendet werden, bspw. im Rahmen eines Abstandsregelsystems, eines Spurhaltesystems oder eines Systems zur Warnung des Fahrers bei Verlassen der Fahrspur.

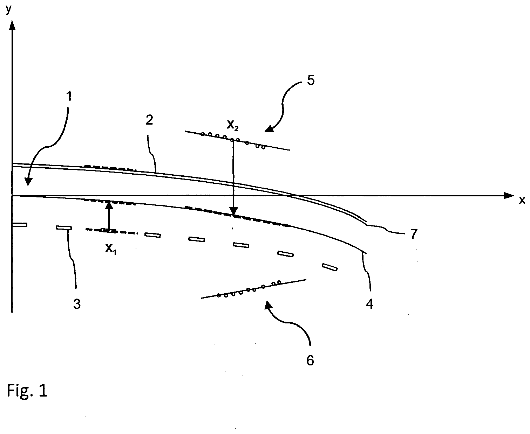

Die Erfindung wird nachfolgend unter Bezugnahme auf die einzige beigefügte Figur 1 näher erläutert, die in einem Fahrbahn-Koordinatensystem einer Fahrbahn dargestellte fahrbahnparallele und nicht fahrbahnparallele Strukturen zur Erläuterung des erfindungsgemäßen Verfahrens zeigt.

Von einem Umgebungssensorsystem, das sowohl eine Kamera, ein Radar- oder Lidarsensor als auch eine digitale Karte mit GPS (bspw. im Rahmen eines Navigationssystems) darstellen kann, werden Sensordaten für eine Auswerteeinheit bereitgestellt, mit der das erfindungsgemäße Verfahren durchgeführt wird.

Anhand dieser Sensordaten wird eine Merkmalsextraktion durchgeführt, indem fahrbahnparallele Strukturen, wie Leitplanken, Fahrbahnränder, Fahrspurmarkierungen, Bordsteine oder sonstige fahrbahnparallel verlaufende Begrenzungen detektiert werden.

Bei einer Videoverarbeitung wird hierzu beispielsweise ein Kantendetektionsverfahren verwendet, mit dem die Konturen solcher fahrbahnparalleler Strukturen detektiert werden können. Dabei wird eine Kante als Änderung der Grauwerte betrachtet, d. h. die Grauwertgradienten ermittelt und mittels einer Hough-Transformation ausgewertet.

Hierzu werden die Sensordaten in Suchbereiche mit auf die Umgebung bezogenen horizontalen und vertikalen Begrenzungen eingeteilt, wobei zur vertikalen Begrenzung die im Nahbereich detektierte Spur verwendet wird.

Als Fahrspurmodell wird ein Klothoidenmodell mit Klothoidenabschnitten verwendet, die jeweils durch eine Startkrümmung $c_0$ und eine Krümmungsänderung $c_1$ beschrieben und mittels eines Polynoms dritten Grades im x-y-Koordinatensystem der Fahrspur approximiert wird:

$$l(x) = y = \frac{c_0}{2} x^2 + \frac{c_1}{6} x^3 \,.$$

Aus den Sensordaten wird ein Kantenbild extrahiert, das der tangential zur Fahrspurmitte verlaufenden Struktur entspricht und als Tangente im Punkt x vor dem Fahrzeug eine Steigung m aufweist, die mittels einer Hough-Transformation bestimmt wird.

Die Steigung m dieser Tangente wird im Fahrspurmodell als Wert für die Tangentenrichtung im Berührungspunkt mit der die Tangente darstellenden fahrbahnparallelen Struktur übernommen.

Eine solche Situation zeigt Figur 1, die im Koordinatensystem der Fahrbahn dargestellt ist. Die Fahrbahn ist als zweispurige Straße mit einer von einem Fahrbahnrand 2 und einer Mittellinie 3 begrenzten Fahrspur 1 dargestellt. Die Spurmitte 4 der Fahrspur 1 verläuft durch den Koordinatenursprung und verläuft tangential zur x-Achse. Der Fahrbahnrand 2 stellt einen Klothoidenabschnitt dar, dessen Ende mit einem Bezugszeichen 7 bezeichnet ist, das auch eine Übergangsstelle zum nächsten Fahrbahnabschnitt darstellen kann.

In dieser Figur 1 ist an der Position $x_1$ ein einzelner Mittelstreifen 3 als fahrbahnparallele Struktur dargestellt, die aus Bilddaten einer mit einer Kamera aufgenommenen Straßenszene extrahiert wurde. Im Schwerpunkt dieses einzelnen Mittelstreifens 3 wird eine Tangente T1 mit einer Steigung $m_1$ bestimmt, die parallel zur Spurmitte (angedeutet durch einen Pfeil) verläuft.

Des Weiteren zeigt Figur 1 an der Position $x_2$ eine weitere fahrbahnparallele Struktur 5, die aus mehreren, in einer geraden Reihe angeordneten Gegenständen besteht, die bspw. mittels eines Radarsensors als feststehende Radarziele detektiert werden. Im Schwerpunkt dieser Struktur verläuft parallel zur Spurmitte 4 (angedeutet durch einen Pfeil) eine Tangente T2 mit einer Steigung $m_2$.

Schließlich zeigt Figur 1 eine weitere Fahrbahnrandstruktur 6 mit einer geradenförmigen Struktur, die jedoch nicht fahrbahnparallel verläuft.

Die auf der Basis der Sensordaten durchgeführte Messung der Steigungen $m_i$ und der zugehörigen Positionen $x_i$ wird zur Schätzung der Spurmodellparameter $c_0$ und $c_1$ des Klothoidenmodells mittels eines Kalman-Filters verwendet, das im $x_i$-$y_i$-Koordinatensystem des Fahrzeugs in der oben genannten Approximation folgende Form aufweist:

$$l(x_i) = y_i = y_{0L/R} + \theta x_i + \frac{c_0}{2} x_i^2 + \frac{c_1}{6} x_i^3 \,,$$

wobei $y_{0L/R}$ die Abweichung (Offset) des Fahrzeugs von der Spurmitte nach links oder rechts und $\theta$ den Gierwinkel des Fahrzeugs darstellt.

Die zugehörige Messgleichung im Kalman-Filter-Modell ergibt sich durch Ableitung der obigen Gleichung $l(x_i)$ und Gleichsetzung mit der Steigung $m_i$:

$$m_i = \theta + c_0 x_i + \frac{c_1}{2} x_i^2 .$$

Mit dieser Messgleichung wird die Korrektur der geschätzten Spurmodellparameter $c_0$ und $c_1$ durchgeführt um somit den weiteren Verlauf der Fahrspur zu bestimmten. Damit lässt sich der Fahrspurverlauf über den gesamten betrachteten Entfernungsbereich, insbesondere über den Fernbereich modellieren.

Als Fahrspurmodell können neben dem hier beschriebenen einfachen Klothoidenmodell auch ein Doppel-Klothoiden-Modell oder ein auf Stützpunkten beruhendes Splines-Modell verwendet werden.

Es ist auch möglich, vor der Schätzung der Spurmodellparameter $c_0$ und $c_1$ mittels der Steigung m zunächst die Krümmung $c_0$ in dem betrachteten Entfernungsabschnitt zu ermitteln. Hierzu wird in jedem Entfernungsabschnitt der Fahrspurverlauf durch die Parabel

$$l(x) = \frac{c_0}{2} x^2$$

approximiert, wobei $c_0$ die Krümmung in der x-Position darstellt. Die aus den Sensordaten ermittelte Steigung m von detektierten fahrbahnparallelen Strukturen entspricht der Steigung der Parabel an der gleichen x-Position und ist durch die erste Ableitung gegeben, d. h. es ist $c_0 x = m$. Somit ergibt sich für die Krümmung $c_0$:

$$c_0 = \frac{m}{x} .$$

Um falsche Strukturen auszuschließen, also solche, die nicht fahrbahnparallel sind, kann mittels eines zweidimensionalen Hough-Verfahrens im erfassten Entfernungsbereich nach Geradenpaaren gesucht werden, die parallel auf gegenüberliegenden Fahrbahnseiten verlaufen. Durch ein solches Parallelitätskriterium können Geraden, wie die in Figur 1 dargestellten Fahrbahnrandstrukturen 6 ausgeschlossen werden.

Für das dargestellte erfindungsgemäße Verfahren ist es zur Detektion von fahrbahnparallelen Strukturen nicht erforderlich, deren seitlichen Abstand zu kennen, wodurch auch die Schätzung des seitlichen Offsets des Fahrzeugs entfällt.

Die im Nahbereich zu ermittelnden Parameter $y_{0L/R}$ (Distanz bzw. Offset des Fahrzeugs zur Spurmitte) und die Spurbreite lassen sich mittels Einzelmessungen bestimmen. Damit ergibt sich eine vorteilhafte Partitionierung des Zustandsraumes mit Offset und Spurbreite aus dem Nahbereich und den Spurmodellparametern $c_0$ und $c_1$ im Fernbereich. Der Gierwinkel $\theta$ wird ebenfalls in der Nahbereichs-Partition bestimmt. Eine solche Partitionierung des Zustandsraumes bewirkt, dass Spurbreitenänderungen, bspw. bei Spuraufweitungen oder Ausfahrten keinen negativen Einfluss auf die Spurmodellparameter, also unabhängig hiervon ist und somit eine Reduktion der Freiheitsgrade bewirkt. Dadurch wird das Filtersystem, hier im Ausführungsbeispiel das Kalman-Filter robuster, also weniger fehleranfällig und laufzeiteffizienter und führt zu präziseren Schätzwerten.

Da der im Nahbereich erfasste Fahrspurverlauf mit dem erfindungsgemäßen Verfahren in den Fernbereich extrapoliert wird, entfällt die Mittelung und Schätzung des Offsets und der Fahrspurbreite im Fernbereich.

Um die in Figur 1 dargestellte, falsche geradenförmige Fahrbahnrandstrukturen 6 auszuschließen, deren Geraden G im Schwerpunkt nicht in fahrbahnparalleler Richtung verlaufen, wird beim Auswerten der Sensordaten , wie oben bereits beschrieben, ein Parallelitätskriterium verwendet, wonach bspw. nur in der gleichen Position, links und rechts der Fahrspur verlaufende fahrbahnparallele Strukturen bestimmt werden, die zueinander parallel sind.

Jede Einzelmessung (Tangente) lässt sich in eine Krümmungsinformation an der x-Stelle umrechnen. Werden die einzelnen Tangentialmessungen sequentiell in x-Richtung betrachtet, zeigen die Messungen ab der Klothoiden-Übergangsstelle 7 (Figur 1) eine Abweichung zum gefilterten Fahrspurmodell, wodurch sich diese Übergangsstelle 7 bestimmen lässt. Damit kann im Rahmen eines Fahrerassistenzsystems eine dem natürlichen Fahrverhalten entsprechende Querregelung des Fahrzeugs durchgeführt werden.

Im Rahmen eines Fahrerassistenzsystems lässt sich auch das Erreichen von fahrspurbezogenen Systemgrenzen prädizieren. So kann z. Bsp. bei einer Zufahrt eine enger werdenden Kurve im Voraus erkannt werden kann, so dass im Rahmen eines Fahrerassistenzsystems der Fahrer des Fahrzeugs auf eine Systemübergabe vorbereitet oder ein Kurvenradius in 60 m Entfernung vor dem Fahrzeug bzw. ein minimaler Kurvenradius angezeigt werden kann.

Mit dem erfindungsgemäßen Verfahren wird aufgezeigt, dass die zusätzliche Verwendung von fahrbahnparallelen Strukturen, wie Markierungen, Bordsteine, Leitplanken und Bebauungen für die vorausschauende Bestimmung von Kurvenradien möglich ist, ohne dass eine Filtererweiterung erforderlich ist.

**Patentansprüche**

1. Verfahren zur Bestimmung des Fahrspurverlaufes einer Fahrspur (1) für ein bewegtes Kraftfahrzeug mit wenigstens einem Umgebungssensorsystem, wobei die von dem auf die Fahrspur (1) gerichteten Umgebungssensorsystem erzeugten Sensordaten einer Auswertung zur Erkennung von fahrspurrelevanten Merkmalen unterzogen werden, ein Fahrspurmodell mit wenigstens einem den Fahrspurverlauf bestimmenden Spurmodellparameter für die Fahrspur (1) erzeugt wird, und in den Sensordaten fahrbahnparallele Strukturen (3, 5) wenigstens eines Entfernungsbereichs detektiert werden, **dadurch gekennzeichnet, dass**

- die tangentiale Richtung wenigstens der einen fahrbahnparallelen Struktur (3, 5) als Steigung einer Tangente bestimmt wird, und
- zur Bestimmung wenigstens des einen Spurmodellparameters mittels eines prädiktiven Schätzverfahrens im Fahrspurmodell der Wert der Steigung der Tangente als Wert für die Tangentenrichtung im Berührungspunkt mit der fahrbahnparallelen Struktur (3, 5) übernommen wird.

2. Verfahren nach Anspruch 1,
**dadurch gekennzeichnet, dass**
als Fahrspurmodell stetig differenzierbare Segmente verwendet werden, vorzugsweise im Rahmen eines klothoidisches Fahrspurmodels, eines Kreisbogenmodells oder eines Splinemodells.

3. Verfahren nach Anspruch 1 oder 2,
**dadurch gekennzeichnet, dass**
fahrbahnparallele Strukturen mittels eines Kantendetektionsverfahrens bestimmt werden, indem Grauwertgradienten ermittelt und ausgewertet werden.

4. Verfahren nach Anspruch 3,
**dadurch gekennzeichnet, dass**
die Auswertung der Grauwertgradienten mittels einer Hough-Transformation durchgeführt wird.

5. Verfahren nach einem der Ansprüche 2 oder 3,
**dadurch gekennzeichnet, dass**
mittels eines Parallelitätskriterium sich in gleicher Entfernung vor dem Kraftfahrzeug sich befindende fahrbahnparallele Strukturen detektiert werden und nicht-parallele Strukturen ausgeschlossen werden.

6. Verfahren nach einem der vorhergehenden Ansprüche,
**dadurch gekennzeichnet, dass**
die prädiktive Schätzung des Spurmodellparameters mittels eines Kalman-Filter-Models durchgeführt wird.

7. Verfahren nach einem der vorhergehenden Ansprüche,
**dadurch gekennzeichnet, dass**

aus den den Nahbereich der Fahrspur erfassenden Sensordaten die Spurbreite der Fahrspur, die Abweichung des Kraftfahrzeugs von der Spurmitte und der Gierwinkel des Kraftfahrzeugs bestimmt wird und der weitere Fahrspurverlauf mittels des wenigstens einen erzeugten Spurmodellparameters bestimmt wird.

8. Fahrzeug mit einem Fahrerassistenzsystem zur Durchführung des erfindungsgemäßen Verfahrens nach einem der vorhergehenden Ansprüche.

**Claims**

1. A method for determining the course of a road (1) for a moving motor vehicle with at least one surroundings sensor system, wherein the sensor data generated by the surroundings sensor system that is directed toward the road (1) are evaluated in order to detect lane-relevant features, a lane model having at least one lane model parameter that determines the course of the lane is generated for the road (1), and structures (3, 5) of at least one distance range that are parallel to the road are detected in the sensor data, **characterized in that**

- the tangential direction of at least the one structure (3, 5) that is parallel to the road is determined as a slope of a tangent line, and
- the value of the slope of the tangent line is adopted as the value of the direction of the tangent line at the point of contact with the structure (3, 5) that is parallel to the road in order to determine at least the one lane model parameter by a predictive estimation method in the lane model.

2. The method according to Claim 1,
**characterized in that**
continuously differentiable segments are used as the lane model, preferably within the framework of a clothoid road model, a circular-arc model or a spline model.

3. The method according to Claim 1 or 2,
**characterized in that**
structures that are parallel to the road are determined by an edge detection method by determining and evaluating gray-scale gradients.

4. The method according to Claim 3,
**characterized in that**
the gray-scale gradients are evaluated by a Hough transform.

5. The method according to any one of Claims 2 or 3,
**characterized in that**

by a criterion of parallelism, structures that are parallel to the road and that are located in front of the motor vehicle and at the same distance from the motor vehicle are detected and non-parallel structures are precluded.

6. The method according to any one of the preceding claims,
**characterized in that**
the predictive estimation of the lane model parameter is performed by a Kalman filter model.

7. The method according to any one of the preceding claims,
**characterized in that**
the lane width of the road, the deviation of the motor vehicle from the middle of the lane and the yaw angle of the motor vehicle are determined from the sensor data that cover the near range of the road and the further course of the lane is determined by the at least one generated lane model parameter.

8. A vehicle having a driver assistance system, for carrying out the method according to the invention according to any one of the preceding claims.

**Revendications**

1. Procédé pour la détermination du tracé de voie d'une voie de circulation (1) pour un véhicule à moteur mobile avec au moins un système de capteur environnemental, les données de capteur générées par le système de capteur environnemental dirigé sur la voie de circulation (1) étant soumises à une analyse pour la détection de caractéristiques concernant la voie de circulation, un modèle de voie de circulation avec au moins un paramètre de modèle de voie déterminant le tracé de voie étant généré pour la voie de circulation (1), et des structures parallèles à la chaussée (3, 5) d'au moins une zone de distance étant détectées dans les données de capteur, **caractérisé en ce que**

   - la direction tangentielle d'au moins une structure parallèle à la chaussée (3, 5) est déterminée comme pente d'une tangente, et
   - pour la détermination d'au moins un paramètre de modèle de voie au moyen d'un procédé d'estimation prédictif dans le modèle de voie de circulation, la valeur de la pente de la tangente est reprise comme valeur pour la direction de tangente au point de contact avec la structure parallèle à la chaussée (3, 5).

2. Procédé selon la revendication 1,
**caractérisé en ce que**
des segments pouvant toujours être différenciés sont utilisés comme modèle de voie de circulation, de préférence dans le cadre d'un modèle de voie de circulation clothoïde, d'un modèle d'arc de cercle ou d'un modèle de spline.

3. Procédé selon la revendication 1 ou 2,
**caractérisé en ce que**
des structures parallèles à la chaussée sont déterminées au moyen d'un procédé de détection de contours, par la détermination et l'analyse de gradients de valeur de gris.

4. Procédé selon la revendication 3,
**caractérisé en ce que**
l'analyse des gradients de valeur de gris est exécutée au moyen d'une transformée de Hough.

5. Procédé selon l'une des revendications 2 ou 3,
**caractérisé en ce que**
les structures parallèles à la chaussée se trouvant à distance égale du véhicule à moteur sont détectées au moyen d'un critère de parallélisme et les structures non parallèles sont exclues.

6. Procédé selon l'une quelconque des revendications précédentes,
**caractérisé en ce que**
l'estimation prédictive du paramètre de modèle de voie est exécutée au moyen d'un modèle de filtre de Kalman.

7. Procédé selon l'une quelconque des revendications précédentes,
**caractérisé en ce que**
la largeur de voie de la voie de circulation, l'écart du véhicule à moteur du milieu de voie et l'angle de lacet du véhicule à moteur sont déterminés à partir des données de capteur enregistrant la zone de proximité de la voie de circulation et le tracé de voie de circulation ultérieur est déterminé au moyen de l'au moins un paramètre de modèle de voie généré.

8. Véhicule avec un système d'assistance au conducteur pour l'exécution du procédé conforme à l'invention selon l'une des revendications précédentes.

Fig. 1

**IN DER BESCHREIBUNG AUFGEFÜHRTE DOKUMENTE**

**In der Beschreibung aufgeführte Patentdokumente**

- US 6718259 B1

**In der Beschreibung aufgeführte Nicht-Patentliteratur**

- A robust lane dedection an tracking method based on computer Vision. **YONG ZHOU et al.** MEASURE-MENT SCIENCE AND TECHNOLOGY. IOP BRIS-TOL, 01. April 2006, vol. 17, 736-745